# EUROPEAN PATENT APPLICATION

(11) **EP 1 195 764 A2**
(43) Date of publication of application: **10.04.2002**
(21) Application number: 01121714.8
(22) Date of filing: 17.09.2001
(51) Int. Cl.: G11B 20/10, G11B 27/034, H04S 1/00

(54) **Rewriting/adding apparatus and method of control data, transmitting method for use in the apparatus and method, and recording medium with control data recorded therein**

(30) Priority: 19.09.2000 JP 2000283177
(71) Applicant: VICTOR COMPANY OF JAPAN, LTD., Yokohama-Shi, Kanagawa-Ken (JP)
(72) Inventor: Takeishi, Hiroyuki, Takasaki-shi, Gunma-ken (JP); Takeda, Masami, Takasaki-shi, Gunma-ken (JP)
(74) Representative: HOFFMANN - EITLE

(57) **Abstract**

A CD player (10) plays a disk (11') in which sound data (data to be controlled) and sound field data (control data) are mixed. A reproduction signal is supplied to an AV amplifier (20) in an interface format of IEC60958 or IEC61937. A DIR (22) receives the reproduction signal. A DSP (23) extracts the sound field data from the reproduction signal, and writes the data into a rewritable memory (26).

## Description

### BACKGROUND OF THE INVENTION

### 1. Field of the Invention

The present invention relates to a rewriting/adding apparatus and method of control data for rewriting or adding control data for controlling data to be controlled such as a sound signal and image signal, a transmitting method for use in the apparatus and method, and a recording medium in which the control data is recorded.

### 2. Description of the Related Art

In an audio apparatus and image display apparatus, it is general to subject a sound signal and image signal to various controls. As one example, control of the sound signal in an audio visual (AV) amplifier will be described. The AV amplifier includes a digital signal processor (hereinafter referred to as DSP), the DSP subjects the sound signal to a signal processing, and various sound fields are reproduced.

Examples of the sound field include "action" preferable for watching/listening to an action movie and sports program, "theater" for reproducing an acoustic effect equal to or approximate to the acoustic effect of a movie theater, "symphony" suitable for watching/listening to a music program of orchestra or the like, "jazz club" for reproducing the acoustic effect equal to or approximate to the acoustic effect of a live performance in a live house, and the like. Additionally, these names of sound field modes are only examples.

The AV amplifier includes storage means such as a read only memory (ROM), and sound field data (control data) corresponding to respective sound field modes are stored in the storage means, so that the sound signal (data to be controlled) can be reproduced in the aforementioned sound field modes. The DSP reads the sound field data corresponding to the sound field mode selected by a user from the storage means, subjects the inputted sound signal to the signal processing based on the sound field data, and outputs the signal. Thereby, the sound signal is reproduced in the selected sound field mode.

In the conventional AV amplifier, the sound field data is only stored beforehand in the storage means, and there is a problem that a user can select only the predetermined sound field mode. That is, even if the user desires to add a new sound field mode or change the existing sound field mode, such desire cannot be satisfied. This problem similarly exists not only in the AV amplifier but also in another apparatus having the control data for controlling the data to be controlled.

However, in order to rewrite/add the control data, the user unfavorably has to purchase a special apparatus for rewriting/adding the control data, or perform a complicated operation. Moreover, in order to realize a constitution for rewriting/adding the control data, a circuit constitution is unfavorably complicated, and a price unfavorably largely increases. Therefore, there is a demand for realization of the constitution for rewriting/adding the control data without complicating the circuit constitution or largely increasing the price, or without requiring the special apparatus or the complicated operation.

### SUMMARY OF THE INVENTION

The present invention has been developed in consideration of the aforementioned problem, and an object thereof is to provide a rewriting/adding apparatus and method of control data in which the control data for controlling data to be controlled can be rewritten/added in a simple constitution with a simple operation. Moreover, an object of the present invention is to provide a transmitting method of the control data for preferable use in the apparatus and method, and a recording medium in which the control data is recorded.

To achieve the aforementioned objects, there is provided a rewriting/adding apparatus of control data for rewriting or adding the control data for controlling data to be controlled, comprising: receiving means for receiving a digital signal in which the control data is described in at least one part of a region for transmitting the data to be controlled in an interface format determined to transmit the data to be controlled; extracting means for extracting the control data from the digital signal; rewritable storage means; and control data writing means for writing the control data extracted by the extracting means into the storage means to rewrite the control data stored beforehand in the storage means or to add new control data to the storage means.

In a preferred mode for carrying out the present invention, the digital signal includes both the control data and the data to be controlled in the region for transmitting the data to be controlled, and the extracting means also extracts the data to be controlled from the digital signal.

Moreover, to achieve the aforementioned objects, there is provided a rewriting/adding method of control data for rewriting or adding the control data for controlling data to be controlled, comprising: a receiving step of receiving a digital signal in which the control data is described in at least one part of a region for transmitting the data to be controlled in an interface format determined to transmit the data to be controlled; an extracting step of extracting the control data from the digital signal; and a control data writing step of writing the control data extracted by the extracting step into storage means to rewrite the control data stored beforehand in the storage means or to add new control data to the storage means.

In the preferred mode for carrying out the present invention, the digital signal includes both the control data and the data to be controlled in the region for transmitting the data to be controlled, and the extracting step comprises also extracting the data to be controlled from the digital signal.

Furthermore, to achieve the objects, there is provided a transmitting method of control data for transmitting the control data in order to rewrite or add the control data for controlling data to be controlled, comprising the steps of: using a predetermined interface format for transmitting the data to be controlled to describe the control data in at least one part of a region for transmitting the data to be controlled in the interface format and transmit the control data.

Additionally, to achieve the objects, there is provided a recording medium for use in rewriting or adding control data for controlling data to be controlled, the control data being recorded in a digital signal, wherein bits for recording the data to be controlled are determined as first bits, and the control data is recorded in second bits which are a lower part of the first bits, and the data to be controlled is recorded in upper third bits constituted by excluding the second bits from the first bits.

Moreover, to achieve the objects, there is provided a rewriting/adding apparatus of control data for rewriting or adding the control data for controlling data to be controlled, in which the data to be controlled is used as sound data, and the control data is constituted as sound field data for subjecting the sound data to a signal processing and generating a predetermined sound field, the apparatus comprising: a digital interface receiver for receiving a digital signal in which the sound field data is described in at least one part of a region for transmitting the sound data in an interface format conforming to IEC60958 or IEC61937; a digital signal processor in which first storage means for storing the digital signal is incorporated; rewritable second storage means connected to the digital signal processor; and a microcomputer, connected to the digital signal processor, for controlling the digital signal processor, wherein the microcomputer controls the digital signal processor, extracts the sound field data from the digital signal, and writes the extracted sound field data into the second storage means to rewrite the sound field data stored beforehand in the second storage means or to add new sound field data to the second storage means.

In the preferred mode for carrying out the present invention, the digital signal includes both the sound field data and the sound data in the region for transmitting the sound data, and the digital signal processor also extracts the sound data from the digital signal.

Furthermore, to achieve the objects, there is provided an audio apparatus including a digital signal processor for subjecting inputted sound data to a signal processing based on sound field data and generating a predetermined sound field, comprising: receiving means for receiving the sound field data from the outside; rewritable storage means; and sound field data writing means for writing the sound field data received by the receiving means into the storage means to rewrite the sound field data stored beforehand in the storage means, or to add new sound field data to the storage means.

The nature, principle and utility of the invention will become more apparent from the following detailed description when read in conjunction with the accompanying drawings.

### BRIEF DESCRIPTION OF THE DRAWINGS

In the accompanying drawings:
FIG.1 is a block diagram showing one embodiment of a rewriting/adding apparatus of control data according to the present invention;
FIG.2 is a waveform diagram showing latch, clock, and data signal modes for use in the embodiment shown in FIG.1;
FIG.3 is a diagram of an interface format of IEC60958 or IEC61937;
FIG.4 is an explanatory view of a transmitting method of the control data and a data structure in a recording medium according to the present invention;
FIG.5 is a diagram showing various examples of the transmitting method of the control data and the data structure in the recording medium according to the present invention;
FIG.6 is an explanatory view of an operation in a digital signal processor in an audio apparatus shown in FIG.1;
FIG.7 is an explanatory view of an operation between the digital signal processor and a rewritable memory in the audio apparatus shown in FIG.1;
FIG.8 is an explanatory view of an operation between the digital signal processor and a D/A converter in the audio apparatus shown in FIG.1;
FIG.9 is a block diagram showing another constitution example of a supply apparatus for supplying the control data to the audio apparatus shown in FIG.1; and
FIG.10 is a block diagram showing another constitution example of the supply apparatus for supplying the control data to the audio apparatus shown in FIG.1.

### DESCRIPTION OF THE PREFERRED EMBODIMENTS

A rewriting/adding apparatus and method of control data, a transmitting method for use in the apparatus and method, and a recording medium will be described hereinafter with reference to the accompanying drawings.

In an embodiment of the present invention, as an example for rewriting or adding the control data for controlling data to be controlled, an audio apparatus (e.g., AV amplifier) having DSP is used. A sound signal (data to be controlled) is controlled by the DSP based on various sound field data (control data), and a sound signal is reproduced in various sound field modes. An example in which the sound field data is rewritten or added in the audio apparatus will be described. Hereinafter, to simplify the following description, an operation for adding the sound field data will mainly be described.

Moreover, in the present embodiment, an operation will be described as one example in which an optical disk reproduction apparatus (hereinafter referred to as CD player) for playing a compact disk (hereinafter referred to as CD or disk) is used to add the sound field data. A user who has or is going to buy an AV amplifier generally possesses a CD player. Therefore, the user hardly requires a new expenditure for adding the sound field data. Therefore, a constitution in which the CD player is used to add the sound field data is a preferred embodiment.

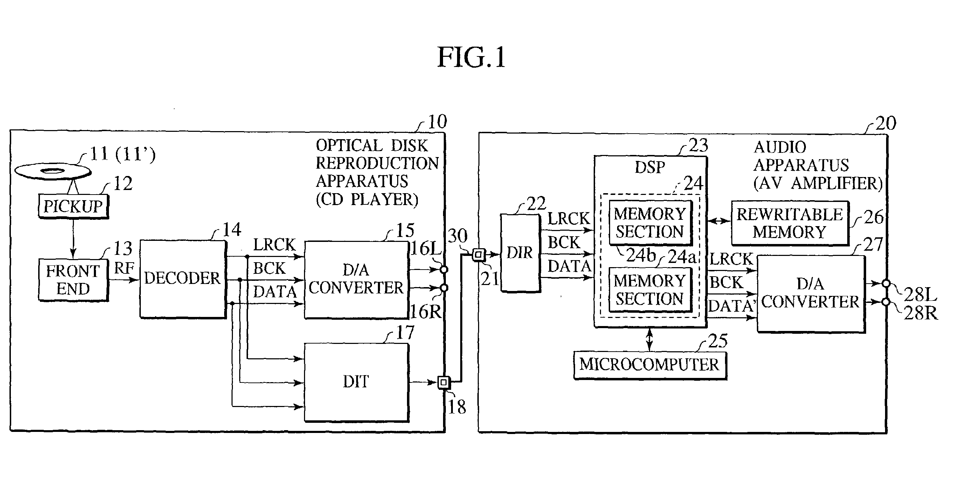

In FIG.1, a CD player 10 is connected to an AV amplifier 20 via an optical cable 30. First, a concrete constitution and operation of the CD player 10 will be described. First, an operation for playing an usual CD will be described. A disk 11 is constituted based on CD standards, and the disk 11 is rotated by a rotating mechanism (not shown). A sound signal (music signal) recorded on the disk 11 is read by a laser beam generated from a pickup 12. An output signal of the pickup 12 is inputted to a front end 13.

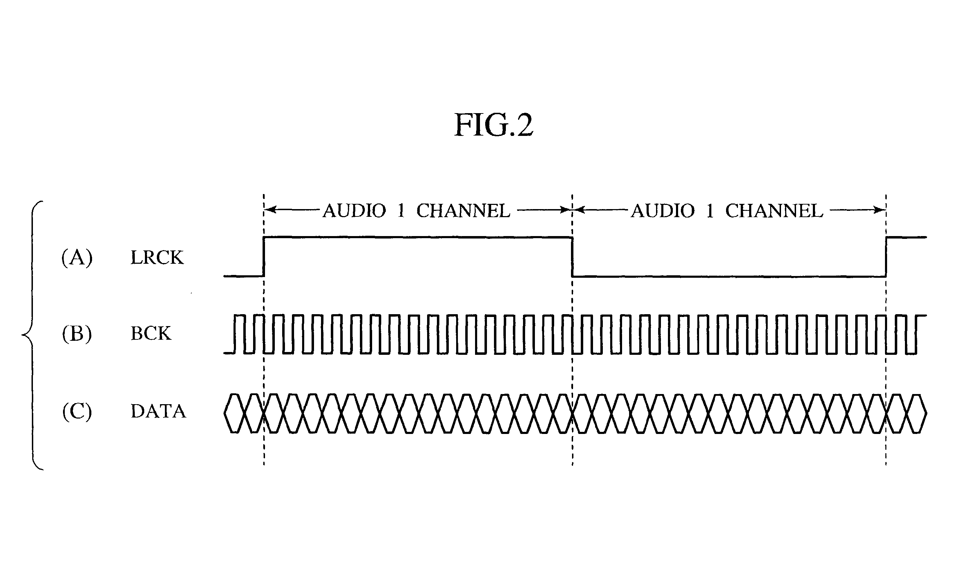

The front end 13 generates a binarized digital signal based on the output signal from the pickup 12. This digital signal is inputted to a decoder 14. The decoder 14 generates and outputs an LR clock as a latch signal (hereinafter referred to as LRCK), bit clock (hereinafter referred to as BCK), and sound signal data (hereinafter referred to as DATA) based on the inputted digital signal. FIGS.2A to 2C show LRCK, BCK, and DATA, respectively. As shown in sections (A)-(C) in FIG.2, LRCK is a signal which is switched to be high or low for each channel. For example, in section (A) in FIG.2, left-side one channel is an audio left (L) channel, and right-side one channel is an audio right (R) channel.

The outputs LRCK, BCK, and DATA from the decoder 14 are inputted to a D/A converter 15 and a digital interface transmitter (hereinafter referred to as DIT) 17. The D/A converter 15 subjects DATA to D/A conversion based on LRCK and BCK, and outputs left and right analog sound signals. The analog sound signals are outputted to the outside via output terminals 16L, 16R. Incidentally, in the present invention, the analog sound signal outputted is not used.

The DIT 17 constitutes transmitting means for outputting DATA as a digital signal of a predetermined interface format based on the inputted LRCK and BCK. The interface format conforms to IEC60958 or IEC61937. The digital signal is supplied to an optical output terminal 18 from the DIT 17. That is, in the present embodiment, an example for transmitting the digital signal as an optical signal will be described. The optical digital signal outputted from the DIT 17 is supplied to an optical input terminal 21 of the AV amplifier 20 described later via the optical cable 30 connected to the optical output terminal 18.

Here, it is to be noted that the digital signal transmitted to the AV amplifier 20 from the CD player 10 is not limited to the optical digital signal. The digital signal from the DIT 17 may be transmitted as an electric signal. Of course, in this case, terminals similar to output terminals 16L, 16R are used instead of the optical output terminal 18 and optical input terminal 21, and a usual cable for transmitting the electric signal is used instead of the optical cable 30.

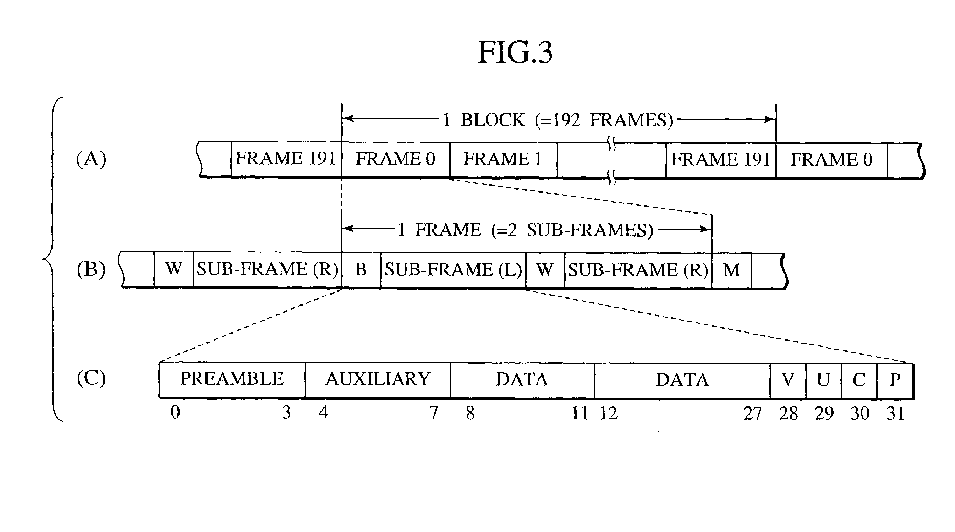

Here, the interface format of IEC60958 or IEC61937 will be described with reference to FIG.3. In FIG.3, an upper bit is shown on the right side. For the interface format of IEC60958 or IEC61937, as shown in section (A) in FIG.3, 192 frames of frames 0 to 191 form one block. As shown in section (B) in FIG.3, each frame has two sub-frames, the left-side sub-frame in the drawing is a sub-frame of L channel, and the right-side sub-frame in the drawing is a sub-frame of R channel.

A preamble as a synchronous signal is disposed in a front portion of the sub-frame. The preamble referred to as preamble M is disposed in a front portion of the sub-frame (L) in the frames 1 to 191. The preamble referred to as preamble B is disposed only in the front portion of the sub-frame (L) in the frame 0. The preamble referred to as preamble W is disposed in front portions of all the sub-frames (R).

Preamble and sub-frame portions constitute 32 bits in total, and are concretely constituted as shown in section (C) in FIG.3. Four bits of bits 0 to 3 form the preamble, four bits of bits 4 to 7 form an auxiliary, four bits of bits 8 to 11 form data, 16 bits of bits 12 to 27 form data, one bit of bit 28 forms a validity, one bit of bit 29 forms a user bit, one bit of bit 30 forms a channel status, and one bit of bit 31 forms a parity.

When the sound signal (i.e., DATA outputted from the decoder 14) recorded in the disk 11 is of 16 bits, the 16-bits sound signal is transmitted as 16 bits of bits 12 to 27. When the sound signal is of 20 bits, the 20-bits sound signal is transmitted as 20 bits including four bits of bits 8 to 11 and 16 bits of bits 12 to 27. Even with auxiliary four bits of bits 4 to 7, the sound signal can be transmitted. That is, a portion of 24 bits of bits 4 to 27 is a region in which the sound signal (data to be controlled) can be transmitted.

When the CD player 10 constituted and operated as described above is used to add the sound field data to the AV amplifier 20, a special disk 11' for adding the sound field mode is used instead of the usual disk 11. Similarly as the disk 11, the disk 11' is based on the CD standards, and is the same as the disk 11 in physical shape and structure, but is different in a structure of data to be recorded.

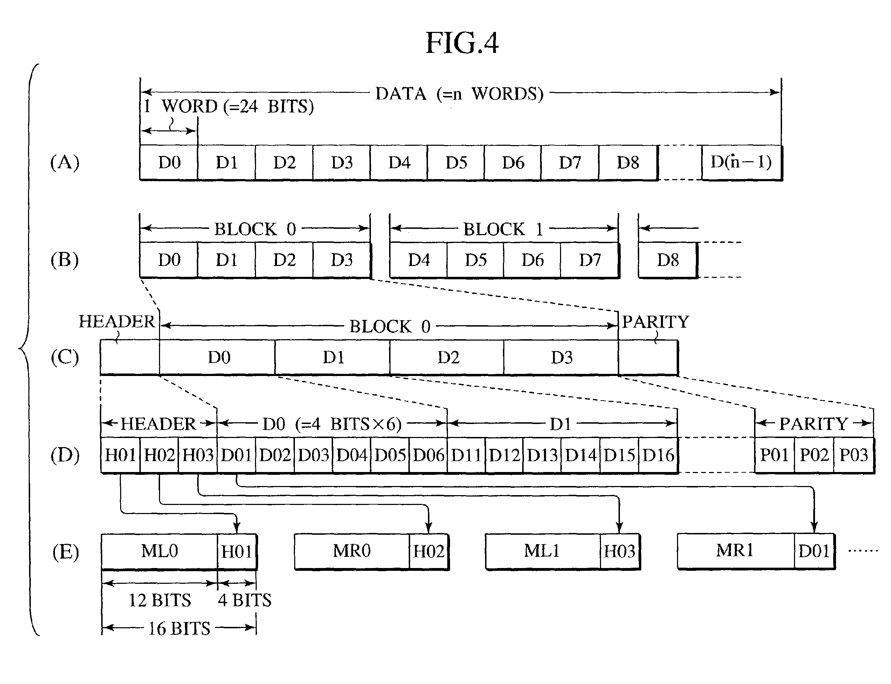

An example of the data structure to be recorded in the disk 11' and transmitted will be described with reference to FIG.4. In FIG.4, the upper bit is shown on the left side. Section (A) in FIG.4 shows one example of the sound field data, and the data is constituted of n words of D0 to D(n-1). Each word is constituted, for example, of 24 bits. As shown in section (B) in FIG.4, the sound field data of n words is divided, for example, into blocks of every four words. Incidentally, in section (B), the respective blocks are shown at intervals, but the interval is disposed for the sake of convenience in order to facilitate understanding, and this does not mean that the interval is disposed between actual data.

Moreover, as shown in section (C) in FIG.4, a header is added to the front portion of each block, and parity is added to a back portion thereof. Furthermore, as shown in section (D) in FIG.4, each of header, block, and parity data is divided, for example, into a transmitting unit of four bits. The header is formed of H01 to H03, D0 is of D01 to D06, D1 is of D11 to D16, and parity is of P01 to P03.

In the present embodiment, lower four bits of the sound signal (music signal) data of 16 bits are removed to form data of 12 bits, and data (header, sound field data itself, and parity) for adding the sound field data is allotted in the lower four bits. Data including the header and parity will sometimes be referred to as the sound field data hereinafter.

In section (E) in FIG.4, ML0, MR0, ML1, MR1 ... form sound data of 12 bits. The sound field data shown in section (D) in FIG.4 is successively allotted as the lower four bits added to the sound signal of 12 bits, and formed as data of 16 bits. The data shown in section (E) is recorded in the disk 11'. That is, for the disk 11', the number of bits for recording the sound data is determined as 16 bits (first bits). The sound field data (strictly to say, data constituted by finely dividing the sound field data) is recorded, for example, in four lower bits (second bits) among the 16 bits, and the sound data is recorded in the upper bits (third bits) obtained by removing the second bits from the first bits.

Therefore, when the disk 11' is played by the CD player 10, DATA outputted from the decoder 14 is a sound signal including sound field data, and the sound data including the sound field data is supplied to the AV amplifier 20 in the aforementioned interface format.

In the present invention, as described later in detail, when the disk 11' is simply played by the CD player 10, the sound field data is extracted in the AV amplifier 20, and thus the sound field data is naturally added. Moreover, when a speaker (not shown) is connected to the AV amplifier 20, and a reproduction signal of the disk 11' is outputted, only the sound data excluding the sound field data is reproduced as the sound signal as described later, and no noise is generated. Therefore, according to the present invention, while enjoying the sound signal (music signal), the sound field data can be added. Conversely, in the rewriting/adding apparatus and method of the control data according to the present invention, the user simply plays the disk 11' similarly when usually listening to music, and the sound field data can then be added.

Even when the disk 11' is played by an apparatus not corresponding to the present invention, the lower four bits as one part of the sound field data only forms a noise to an unheard level. This does not cause disadvantages that an excess noise is generated and discomfort is given to the user or the apparatus is damaged.

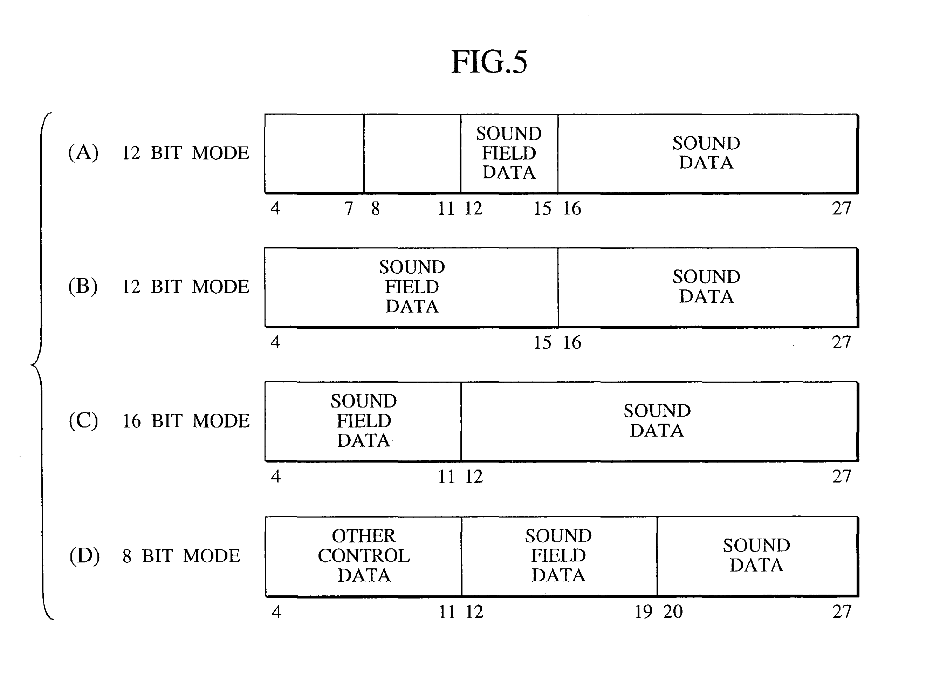

The data structure shown in FIG.4 is simply one example, and is not limited. FIG.5 shows various examples of the data structure. The upper bits are shown on the right side of FIG.5. Section (A) in FIG.5 shows a transmitting mode (12 bit mode) for section (A) in FIG.4 in which the sound data is formed of 12 bits. The sound field data is transmitted in four bits of bits 12 to 15, and the sound data ML0, MR0, ML1, MR1 ... are transmitted in 12 bits of bits 16 to 27 among 24 bits of bits 4 to 27 in section (C) in FIG.3.

Similarly as section (A) in FIG.5, section (B) in FIG.5 shows another example of 12 bit mode in which the sound data is of 12 bits. In this example the sound field data is transmitted in 12 bits of bits 4 to 15. In this case, since much sound field data can be transmitted, the sound field data is completely added in a short time. Moreover, this example is also effective for a large capacity of the sound field data.

Section (C) in FIG.5 shows an example of 16 bit mode in which a sound quality is regarded as important. The sound field data is transmitted in eight bits of bits 4 to 11, and the sound data is transmitted in 16 bits of bits 12 to 27. In this case, the sound quality of the sound signal of 16 bits is never deteriorated.

Section (D) in FIG. 5 shows an example of 8 bit mode in which transfer of the sound field data is regarded as important and transfer of the sound data is regarded as auxiliary. The sound field data is transmitted in eight bits of bits 12 to 19, and the sound data is transmitted in eight bits of bits 20 to 27. Other control data is transmitted in eight bits of bits 4 to 11. When the other control data is used as the sound field data, two types of sound field data can simultaneously be transmitted. Moreover, the other control data may be a name of the sound field data, or other additional data associated with the sound field data to be transmitted.

A concrete constitution and operation of the AV amplifier 20 will next be described. Here, an operation for adding the sound field data will mainly be described. Returning to FIG.1, the optical digital signal inputted via the optical input terminal 21 is inputted to a digital interface receiver (hereinafter referred to as DIR) 22. The DIR 22 is receiving means for returning the inputted optical digital signal to original LRCK, BCK, DATA. The outputs LRCK, BCK, DATA from the DIR 22 are inputted to DSP 23.

The DSP 23 has a memory 24. The memory 24 includes a first memory section 24a and second memory section 24b. The first memory section 24a and second memory section 24b may be separate memories, or may be constituted by dividing one memory region. The DSP 23 is connected to a microcomputer 25, and controlled by the microcomputer 25. The DSP 23 is also connected to a rewritable memory 26 and D/A converter 27.

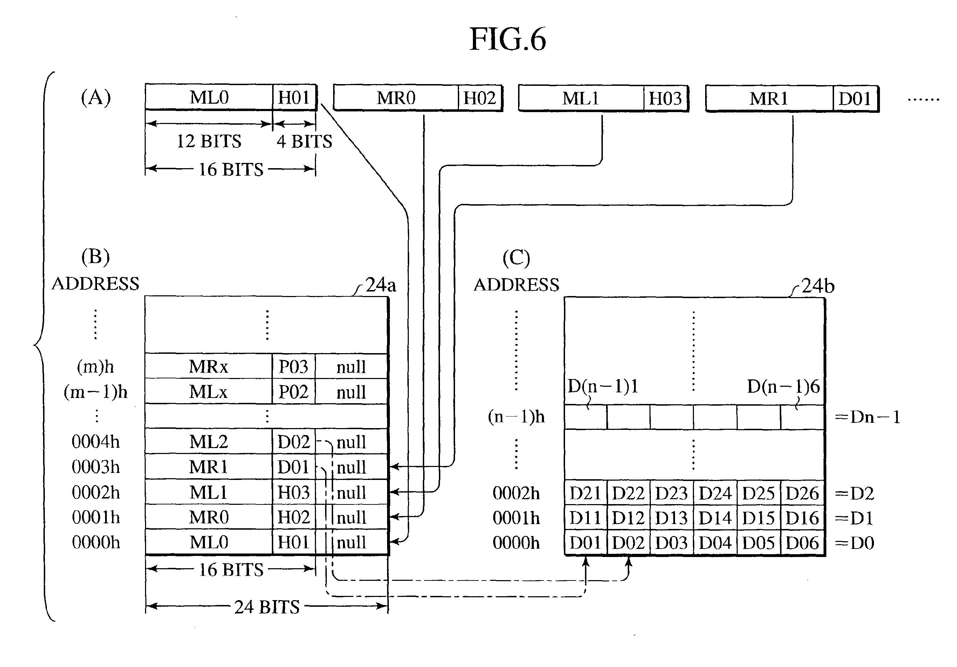

When the sound signal data including the sound field data shown in section (E) in FIG.4 is inputted to the AV amplifier 20 as described above, the DSP 23 extracts the sound field data and the sound data as follows, writes the sound field data into the rewritable memory 26, and reproduces the sound data. FIG.6 shows that the data shown in section (E) in FIG.4 is written into the memory 24. The upper bits are shown on the left side in FIGS.6, 7, and 8. Section (A) in FIG.6 shows that the data shown in section (E) in FIG.4 is successively inputted as DATA, section (B) in FIG.6 shows a writing state into the first memory section 24a, and section (C) in FIG.6 shows a writing state into the second memory section 24b.

As shown by solid-line arrows to section (B) in FIG.6 from section (A) in FIG.6, DATA of 16 bits is first successively written into the first memory section 24a. In the present embodiment, since the first memory section 24a is of 24 bits, zero is written into the lower eight bits as shown by null in section (B) in FIG.6. After DATA is written into the first memory section 24a, only sound field data D01, D02, D03 ... are successively transferred and written into the second memory section 24b as shown by dashed-line arrows to section (C) from section (B) in FIG.6.

When the number of lower bits to be extracted from DATA of 16 bits is predetermined, the DSP 23 may extract only the predetermined number of bits by control of the microcomputer 25. When the number of bits to be extracted is not fixed, the data of the header is referred to, and the predetermined number of bits may be extracted. Since the extracted sound field data D01, D02, D03 ... are parity-checked, presence/absence of a receiving error can be confirmed. For DATA written into the first memory section 24a, a transfer timing of the sound field data D01, D02, D03 ... into the second memory section 24b is arbitrary.

That is, after all DATA is written into the first memory section 24a, the sound field data D01, D02, D03 ... may successively be transferred to the second memory section 24b. Alternatively, after one part (for one address or for a plurality of addresses) of all DATA is written into the first memory section 24a, the sound field data D01, D02, D03 ... may successively be transferred to the second memory section 24b. In general, a capacity of the first memory section 24a is limited. Further, if the capacity of the section is set to such an extent that all DATA can be written, then a price increases. Therefore, it is preferable to successively transfer the sound field data D01, D02, D03 ... to the second memory section 24b after writing the predetermined amount of DATA.

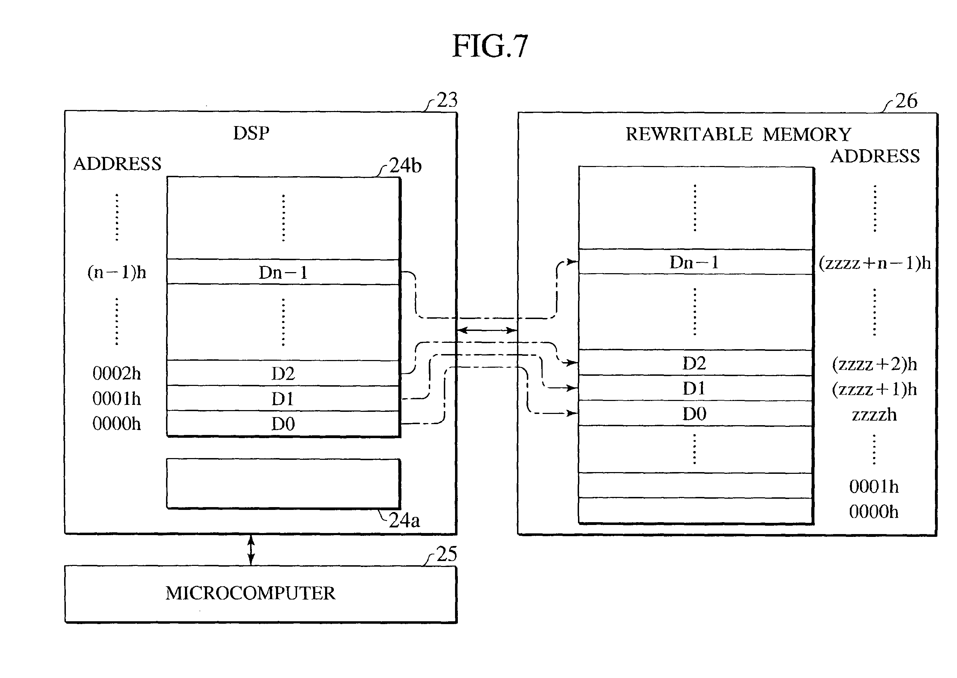

When the sound field data D01, D02, D03 ... are transferred to the second memory section 24b, as shown by dashed-line arrows in FIG.7, the sound field data D01, D02, D03 ... stored in the second memory section 24b are successively transferred and written into the rewritable memory 26 by the control of the microcomputer 25. Also in this case, all the sound field data D01, D02, D03 ... may be written into the second memory section 24b and successively transferred to the rewritable memory 26. Alternatively, one part (for one address or for a plurality of addresses) of the sound field data D01 to Dn-1 may be written into the second memory section 24b and successively transferred to the rewritable memory 26.

In the present embodiment, addresses "zzzzh" to "(zzzz+n-1)h" of the rewritable memory 26 constitute a region into which the new sound field data is written. The sound field data of the predetermined sound field mode is written beforehand in a region of another address in the rewritable memory 26. The sound field data may be rewritten by deleting the sound field data stored beforehand in the rewritable memory 26 and writing new sound field data. Moreover, in the present embodiment, the sound field data of the predetermined sound field mode is stored in the rewritable memory 26, but similarly as the conventional art, only the sound field data of the predetermined sound field mode may be stored in ROM while only new additional sound field data may be written into the rewritable memory 26.

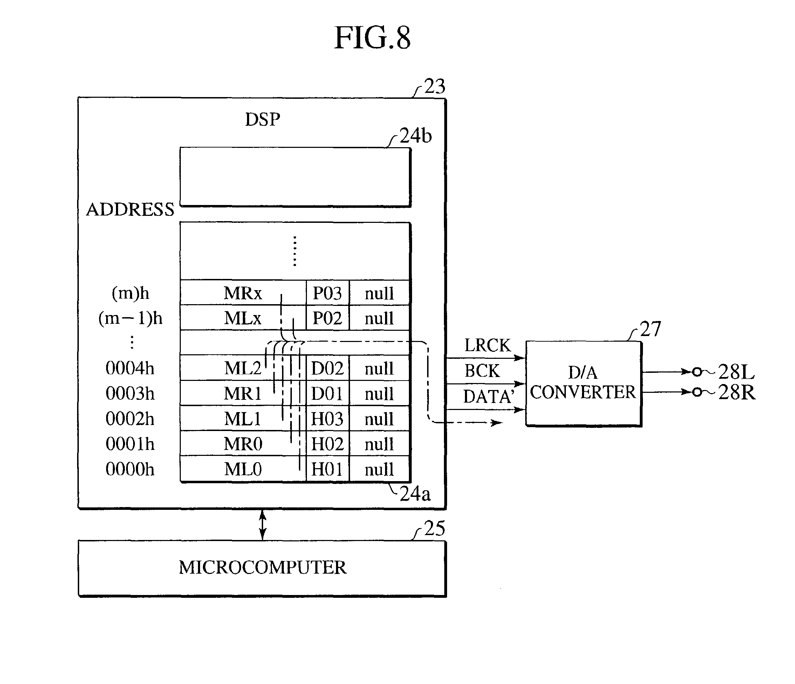

On the other hand, the sound data is reproduced as shown in FIG.8. As shown by a dashed-line arrow in FIG.8, the sound data ML0, MR0, ML1, MR1 ... written in the first memory section 24a are successively supplied as DATA' to the D/A converter 27 by the control of the microcomputer 25. The LRCK and BCK inputted into the DSP 23 are also supplied to the D/A converter 27 together with DATA'. The DATA' supplied to the D/A converter 27 is constituted by extracting only the sound data ML0, MR0, ML1, MR1 ... from the DATA outputted from the DIR 22.

The D/A converter 27 D/A-converts the DATA' based on LRCK and BCK, and outputs left and right analog sound signals. The analog sound signal is supplied to the speaker (not shown) via output terminals 28L, 28R. Incidentally, the sound data ML0, MR0, ML1, MR1 ... are successively supplied to the D/A converter 27 by an address unit. Thereby, the sound data (sound signal) recorded in the disk 11' is correctly reproduced.

As described above, the user can rewrite or newly add the sound field data with respect to the AV amplifier 20. According to the present invention, the rewritable memory such as a flash memory is used instead of a conventional ROM, the DSP 23 only extracts the sound field data and writes the data into the rewritable memory by the control of the microcomputer 25, and therefore the constitution is hardly complicated. Therefore, a price does not largely rise. The user can rewrite or newly add the sound field data with a simple operation of playing the disk 11'.

Additionally, in the constitution of the embodiment shown in FIG.1, since the CD player 10 plays the disk 11' and supplies the sound field data to the AV amplifier 20, the reproduced sound signal is recorded beforehand in the disk 11'. Therefore, the user sometimes listens to unfavorable music. Moreover, in the aforementioned example, the constitution in which the sound data and sound field data are mixed in the disk 11' has been described, but it is also considered that only the sound field data is recorded and used for rewriting/adding the sound field data. In this case, during the rewriting/adding of the sound field data, the CD player 10 cannot be used to play music.

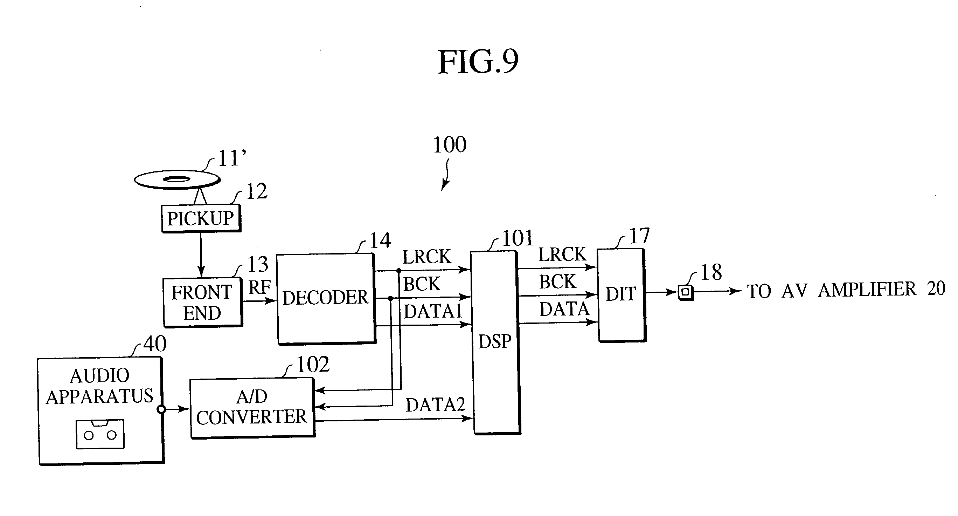

FIG.9 shows a constitution in which music other than the sound data recorded in the disk 11' can be listened to, and music can be listened to when no sound data is recorded in the disk 11'. The constitution of the AV amplifier 20 is the same as that in FIG.1, and only a constitution for supplying the sound field data (sound field data supply apparatus) differs. FIG.9 shows a sound field data supply apparatus 100 as a development of the CD player 10. In FIG.9, the same part as that of FIG.1 is denoted with the same reference numeral, and description thereof is appropriately omitted.

The sound signal reproduced by another audio apparatus 40 (e.g., analog tape player) is converted to a digital signal (DATA2) by an A/D converter 102. The A/D converter 102 uses the LRCK and BCK outputted from the decoder 14 to A/D-convert the sound signal from the audio apparatus 40. A DSP 101 extracts a portion corresponding to the sound field data in the DATA1 outputted from the decoder 14, combines the sound field data with DATA2 to form DATA, and outputs the DATA together with the LRCK and BCK.

The DIT 17 converts DATA to an optical digital signal of the interface format of IEC60958 or IEC61937 based on the inputted LRCK and BCK. The optical digital signal outputted from the DIT 17 is supplied to the AV amplifier 20 via the optical output terminal 18.

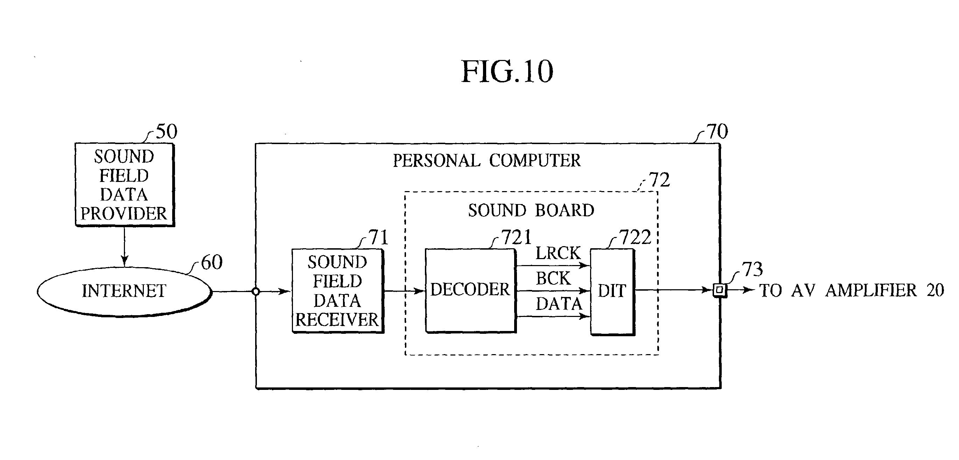

A personal computer can also be used as the sound field data supply apparatus. FIG. 10 shows a case in which the sound field data is distributed via Internet, and the sound field data received by the personal computer is supplied to the AV amplifier 20. In FIG.10, a sound field data provider 50 distributes only the sound field data, or data in which the sound data and sound field data are mixed similarly as described above to Internet 60. A personal computer 70 receives the sound field data from Internet 60, and supplies the data to the AV amplifier 20.

A constitution and operation of the personal computer 70 are as follows. Here, a constitution in which the mixture data of the sound data and sound field data is transmitted and received is shown. A sound field data receiver 71 receives the sound field data, and the sound field data is supplied to a sound board (or a sound card) 72. A decoder 721 in the sound board 72 generates the LRCK and BCK based on a built-in standard clock, and supplies these to a DIT 722 together with DATA. The DIT 722 converts the DATA to the optical digital signal of the interface format of IEC60958 or IEC61937 based on the inputted LRCK and BCK. The optical digital signal outputted from the DIT 722 is supplied to the AV amplifier 20 via an optical output terminal 73.

When only the sound field data is transmitted, and supplied to the AV amplifier 20 together with another music, similarly as FIG.9, the data may be combined by the DSP.

In the aforementioned embodiment, the case in which the sound signal is used as the data to be controlled and the sound field data is used as the control data has been described, but the data to be controlled and the control data are not limited to these. The data to be controlled may be an image signal, or signals other than the sound signal and image signal. When the data to be controlled is the image signal, for example, data for varying a visual state of the image (image mode) can be used as the control data.

As described above in detail, in the rewriting/adding apparatus and method of the control data according to the present invention, the digital signal is received in which the control data is described in at least one part of the region for transmitting the data to be controlled in the interface format defined to transmit the data to be controlled. The control data is extracted from the digital signal, the extracted control data is written into the storage means, and thereby the control data stored beforehand in the storage means is rewritten, or new control data is added to the storage means. Therefore, the control data can be rewritten or added with a simple operation in a simple constitution.

Furthermore, in the transmitting method of the control data according to the present invention, the interface format predetermined for transmitting the data to be controlled is used, and the control data is transmitted in at least one part of the region for transmitting the data to be controlled in the interface format. Therefore, the existing interface format can be used as it is to transmit the control data. Therefore, the audio apparatus, or another apparatus which is requested to rewrite or add the control data can rewrite or add the control data without employing any special constitution.

Additionally, in the recording medium of the present invention, the bits for recording the data to be controlled are determined as the first bits, the control data is recorded in the second bits which are a lower part of the first bits, and the data to be controlled is recorded in upper third bits constituted by excluding the second bits from the first bits. Therefore, the existing apparatus can be used as the control data supply apparatus during the rewriting/adding of the control data. Moreover, the data to be controlled is also recorded. Therefore, when the data to be controlled is the sound signal, music can be listened to. When the data to be controlled is the image signal, the image can simultaneously be watched.

For the audio apparatus of the present invention, since the rewritable storage means is employed as the storage means for storing the sound field data, the rewriting/adding of the sound field data is realized. Therefore, when the user desires to add new sound field mode, or change the existing sound field mode, the desire can be satisfied. Therefore, when the present invention is employed, a new commercial value can be added.

It should be understood that many modifications and adaptations of the invention will become apparent to those skilled in the art and it is intended to encompass such obvious modifications and changes in the scope of the claims appended hereto.

## Claims

1. A rewriting/adding apparatus (20) of control data for rewriting or adding the control data for controlling data to be controlled, said apparatus comprising:
receiving means (22) for receiving a digital signal in which said control data is described in at least one part of a region for transmitting said data to be controlled in an interface format determined to transmit said data to be controlled;
extracting means (23, 25) for extracting said control data from said digital signal;
rewritable storage means (26); and
control data writing means (23, 25) for writing said control data extracted by said extracting means into said storage means to rewrite the control data stored beforehand in said storage means or to add new control data to said storage means.

2. A rewriting/adding apparatus (20) of the control data according to claim 1 wherein said digital signal includes both said control data and said data to be controlled in the region for transmitting said data to be controlled, and
said extracting means (23, 25) also extracts said data to be controlled from said digital signal.

3. A rewriting/adding method of control data for rewriting or adding the control data for controlling data to be controlled, said method comprising:
a receiving step of receiving a digital signal in which said control data is described in at least one part of a region for transmitting said data to be controlled in an interface format determined to transmit said data to be controlled;
an extracting step of extracting said control data from said digital signal; and
a control data writing step of writing said control data extracted by said extracting step into storage means to rewrite the control data stored beforehand in said storage means or to add new control data to said storage means.

4. A rewriting/adding method of the control data according to claim 3 wherein said digital signal includes both said control data and said data to be controlled in the region for transmitting said data to be controlled, and
said extracting step comprises also extracting said data to be controlled from said digital signal.

5. A transmitting method of control data for transmitting said control data in order to rewrite or add the control data for controlling data to be controlled, said method comprising the steps of:
using a predetermined interface format for transmitting said data to be controlled to describe said control data in at least one part of a region for transmitting said data to be controlled in said interface format and transmit the control data.

6. A recording medium for use in rewriting or adding control data for controlling data to be controlled, said control data being recorded in a digital signal,
wherein bits for recording said data to be controlled are determined as first bits, and
said control data is recorded in second bits which are a lower part of said first bits, and said data to be controlled is recorded in upper third bits constituted by removing said second bits from said first bits.

7. A rewriting/adding apparatus (20) of control data for rewriting or adding the control data for controlling data to be controlled, said data to be controlled being used as sound data, said control data being constituted as sound field data for subjecting said sound data to a signal processing and generating a predetermined sound field, said apparatus comprising:
a digital interface receiver (22) for receiving a digital signal in which said sound field data is described in at least one part of a region for transmitting said sound data in an interface format conforming to IEC60958 or IEC61937;
a digital signal processor (23) in which first storage means (24) for storing said digital signal is incorporated;
rewritable second storage means (26) connected to said digital signal processor (23); and
a microcomputer (25), connected to said digital signal processor (23), for controlling said digital signal processor (23),
wherein said microcomputer (25) controls said digital signal processor (23), extracts said sound field data from said digital signal, and writes said extracted sound field data into said second storage means (26) to rewrite the sound field data stored beforehand in said second storage means (26) or to add new sound field data to said second storage means (26).

8. A rewriting/adding apparatus of the control data according to claim 7 wherein said digital signal includes both said sound field data and said sound data in the region for transmitting said sound data, and
said digital signal processor (23) also extracts said sound data from said digital signal.

9. An audio apparatus (20) including a digital signal processor (23) for subjecting inputted sound data to a signal processing based on sound field data and generating a predetermined sound field, said apparatus comprising:
receiving means (22) for receiving the sound field data from the outside;
rewritable storage means (26); and
sound field data writing means (23, 25) for writing said sound field data received by said receiving means into said storage means to rewrite the sound field data stored beforehand in said storage means, or to add new sound field data to said storage means.
